# FASCICULE DE BREVET EUROPEEN

(11) **EP 3 580 946 B1**
(45) Date de publication et mention de la délivrance du brevet: **16.12.2020**
(21) Numéro de dépôt: 18707086.7
(22) Date de dépôt: 06.02.2018
(51) Int. Cl.: H04W 8/20, H04W 8/18

(54) **TECHNIQUE D'OBTENTION D'UN PROFIL D'ACCÈS À UN RÉSEAU**
VERFAHREN ZUM ERHALTEN EINES NETZWERKZUGANGSPROFILS
TECHNIQUE FOR OBTAINING A NETWORK ACCESS PROFILE

(30) Priorité: 09.02.2017 FR 1751068
(43) Date de publication de la demande: 18.12.2019
(73) Titulaire: ORANGE, 75015 Paris (FR)
(72) Inventeur: SCHOULER, Eric, 92326 Châtillon cedex (FR)
(86) Numéro de dépôt international: PCT/FR2018/050284
(87) Numéro de publication internationale: WO 2018/146408

(56) Documents cités:
- EP-A1- 2 986 044
- DE-A1-102014 014 078
- US-A1- 2016 330 608
- V2 Gsma: "GSM Association Non-confidential Official Document SGP.21 -RSP Architecture Security Classification: Non-confidential", , 23 août 2016 (2016-08-23), XP055404424, Extrait de l'Internet: URL:https://www.gsma.com/rsp/wp-content/up loads/docs_1/SGP.21_v2.0-Architecture.pdf [extrait le 2017-09-06]

## Description

L'invention se rapporte au domaine général des télécommunications.

L'invention concerne plus particulièrement une technique d'obtention d'un profil d'accès à un réseau de communication pour un module de sécurité. Plus précisément, cette technique se place dans un contexte dans lequel un profil d'accès a déjà été obtenu pour un autre module de sécurité, dit premier module de sécurité, dans le cadre d'une souscription auprès d'un opérateur. Pour cette souscription, un profil d'accès est requis pour ce module de sécurité.

Cette technique d'obtention d'un profil d'accès se situe dans le domaine des terminaux de communication mobile, et plus particulièrement des cartes eUICC dites embarquées (« embedded »). Une carte eUICC embarquée permet à un dispositif utilisateur mobile de fonctionner avec des abonnements auprès de plusieurs opérateurs avec une seule et même carte eUICC qui peut être non amovible.

L'association GSMA (pour « Global System for Mobile Communications ») développe des spécifications techniques pour une carte de type « eUICC » (de l'anglais « embedded Universal Integrated Circuit Card ») jouant le rôle d'un module de sécurité, prévue pour être embarquée dans un dispositif utilisateur mobile. Un tel module de sécurité peut être inamovible et il est alors nécessaire d'effectuer des actions à distance, par exemple le programmer. La spécification technique de la GSMA « SGP.22 - RSP Technical Spécification » v.2.0 datée du 14 octobre 2016 spécifie une gestion de configuration à distance d'une carte eUICC (ou module de sécurité). Ainsi, lors de l'acquisition d'un nouveau terminal mobile, il n'est plus nécessaire de manipuler au préalable le module de sécurité afin d'accéder au réseau d'un opérateur, voire de le changer lors d'un changement d'opérateur. Un profil d'accès correspond à un ensemble de données et d'applications qui permettent au terminal mobile, une fois le profil activé, d'accéder au réseau d'un opérateur. Il est prévu qu'un utilisateur puisse s'abonner directement via une interface homme-machine de son dispositif utilisateur, ou en se rendant dans une boutique de l'opérateur ou/et qu'il installe un profil d'accès au réseau. Il est également prévu qu'il puisse changer d'opérateur de la même façon.

Pour ce faire, l'utilisateur obtient un code d'activation AC (pour « Activation Code ») lui permettant de contacter un serveur chargé de la préparation des données de gestion de souscription SM-DP+ (pour « Subscription Manager Data Preparation+ ») afin de télécharger un profil d'accès qui a été préparé pour lui. Ce code d'activation comprend notamment une adresse du serveur SM-DP+ à contacter pour obtenir le profil d'accès et une référence permettant au serveur d'identifier ce profil d'accès.

Pour une offre comprenant une pluralité de modules de sécurité, dite offre « multi-SIM », un utilisateur ou un gestionnaire d'une flotte de dispositifs utilisateur mobiles doit se connecter sur un portail de l'opérateur, s'authentifier, rechercher sa souscription auprès de cet opérateur, demander d'ajouter un nouveau dispositif utilisateur puis obtenir le code d'activation, par exemple en le scannant.

Cette solution n'est donc pas satisfaisante pour l'utilisateur ou le gestionnaire de flotte car elle nécessite de nombreuses interactions avec le système d'information de l'opérateur.

La publication brevet US2016/0330608A1 décrit le téléchargement d'un profil d'accès dans un premier module de sécurité suite à une requête d'un deuxième module de sécurité, disposant d'un profil d'accès à un réseau de communication.

La publication brevet DE102014014078 décrit le transfert d'un profil d'accès dans un premier terminal mobile par transfert à partir d'un deuxième terminal mobile disposant d'un profil d'accès à un réseau de communication.

Un des buts de l'invention est de remédier à des insuffisances/inconvénients de l'état de la technique et/ou d'y apporter des améliorations.

Selon un premier aspect, l'invention a pour objet un procédé d'obtention d'un profil d'accès à un réseau de communication pour un premier module de sécurité associé à un premier dispositif utilisateur. Ce procédé comprend pour un deuxième dispositif utilisateur auquel un deuxième module de sécurité est associé, le deuxième module de sécurité ayant obtenu un profil d'accès au réseau en relation avec une souscription auprès d'un opérateur :
- sur réception d'une commande d'association du premier dispositif utilisateur à ladite souscription, un envoi par le deuxième dispositif utilisateur au premier dispositif utilisateur, d'un message comprenant une adresse de contact d'un serveur configuré pour fournir par téléchargement un profil d'accès et une donnée permettant au serveur d'interroger un serveur de contrôle pour obtenir un ordre de téléchargement du profil d'accès,
   ledit message étant destiné à déclencher un envoi par ledit premier module de sécurité d'une requête d'obtention de profil d'accès en association avec ladite souscription, la requête étant adressée à l'adresse de contact du serveur et comprenant ladite donnée permettant audit serveur d'interroger le serveur de contrôle ;
- une réception par le deuxième dispositif utilisateur en provenance du premier dispositif utilisateur d'une confirmation d'un téléchargement du profil d'accès dans le premier module de sécurité.

Corrélativement, l'invention a également pour objet un procédé d'obtention d'un profil d'accès à un réseau de communication pour un premier module de sécurité associé à un premier dispositif utilisateur. Ce procédé comprend :
- une réception par un serveur configuré pour fournir par téléchargement un profil d'accès, d'une requête d'obtention de profil d'accès en association avec une souscription auprès d'un opérateur en provenance dudit premier module de sécurité, la souscription comprenant au moins un deuxième dispositif utilisateur auquel un deuxième module de sécurité est associé, le deuxième module de sécurité ayant obtenu un profil d'accès au réseau en relation avec ladite souscription, la requête étant adressée à l'adresse de contact du serveur et comprenant une donnée permettant audit serveur d'interroger un serveur de contrôle pour obtenir un ordre de téléchargement du profil d'accès ;
- en fonction de la donnée reçue, une interrogation du serveur de contrôle pour obtenir un ordre de téléchargement du profil d'accès dans le premier module de sécurité ;
- sur obtention dudit ordre, un téléchargement du profil d'accès dans le premier module de sécurité, une confirmation étant envoyée par le premier dispositif utilisateur au deuxième dispositif utilisateur une fois le profil téléchargé.

Dans un mode de réalisation particulier, le procédé d'obtention d'un profil d'accès à un réseau de communication pour un premier module de sécurité associé à un premier dispositif utilisateur comprend :
- une réception par un serveur configuré pour fournir par téléchargement un profil d'accès, d'une requête d'obtention de profil d'accès en association avec une souscription auprès d'un opérateur en provenance dudit premier module de sécurité, la souscription comprenant au moins un deuxième dispositif utilisateur auquel un deuxième module de sécurité est associé, le serveur ayant fourni par téléchargement au deuxième module de sécurité un profil d'accès au réseau en relation avec ladite souscription, la requête étant adressée à l'adresse de contact du serveur et comprenant une donnée permettant audit serveur d'interroger un serveur de contrôle pour obtenir un ordre de téléchargement du profil d'accès, l'adresse de contact et ladite donnée ayant été reçues par le premier dispositif utilisateur dans un message envoyé par le deuxième dispositif utilisateur ;
- en fonction de la donnée reçue, une interrogation du serveur de contrôle pour obtenir un ordre de téléchargement du profil d'accès dans le premier module de sécurité ;
- sur obtention dudit ordre, un téléchargement du profil d'accès dans le premier module de sécurité, une confirmation étant envoyée par le premier dispositif utilisateur au deuxième dispositif utilisateur une fois le profil téléchargé.

La technique d'obtention d'un profil d'accès à un réseau de communication tire son origine d'un problème constaté pour une souscription comprenant une pluralité de modules de sécurité. Elle est toutefois applicable lorsque l'utilisateur ou le gestionnaire de flotte souhaite modifier une souscription courante comprenant un seul module de sécurité pour avoir la possibilité d'accéder au réseau au moyen d'une pluralité de modules de sécurité. Elle est également applicable lorsque l'utilisateur ou le gestionnaire de flotte souhaite remplacer un module de sécurité par un autre module de sécurité dans le cadre de sa souscription.

Grâce à cette technique, l'utilisateur ou le gestionnaire de flotte peut commander de manière très simple une distribution par téléchargement d'un profil d'accès au premier module de sécurité dans le cadre d'une souscription comprenant le deuxième module de sécurité associé au deuxième dispositif utilisateur. En effet, l'utilisateur ou le gestionnaire de flotte commande cette distribution directement à partir du deuxième dispositif utilisateur sans avoir besoin d'interagir avec un système de gestion des souscriptions. Il n'est pas nécessaire pour l'utilisateur ou le gestionnaire de flotte de connaître et de renseigner un numéro contractuel de souscription pour se connecter à un portail de l'opérateur gérant la souscription. De plus, aucune authentification n'est nécessaire. Dans un mode de réalisation particulier, cette commande est effectuée au moyen d'une interface homme-machine offerte par le deuxième dispositif utilisateur.

De plus, la technique d'obtention d'un profil d'accès est applicable à différents types de modules de sécurité, tels que des cartes de type « eUICC », des cartes à puce avec un système d'exploitation offrant les fonctionnalités d'une carte de type eUICC.

Les premier et deuxième dispositifs utilisateur sont connectés au moyen d'un canal de communication. Ce canal de communication est par exemple un canal radio ou sans fil de courte portée, tel qu'un canal WiFi, Bluetooth, NFC, ... Dans un autre exemple de réalisation, le canal de communication est porté par un lien filaire.

L'adresse de contact permet au premier dispositif utilisateur, plus précisément au premier module de sécurité, de contacter le serveur qui est en charge de la distribution de profil d'accès pour l'opérateur du réseau de communication. On rappelle ici que selon la technique antérieure un module de sécurité obtient cette adresse de contact à partir d'un code d'activation qui a été préparé pour lui. Le procédé d'obtention d'un profil d'accès tel que décrit précédemment ne s'appuie pas sur l'obtention de ce code d'activation. Ainsi, en l'absence de ce code d'activation, le premier module de sécurité obtient l'adresse de contact du serveur directement du deuxième dispositif utilisateur.

La donnée comprise dans le message envoyé par le module de sécurité permet au serveur configuré pour fournir par téléchargement un profil d'accès d'identifier l'opérateur gérant la souscription et d'interroger ainsi un serveur de contrôle de cet opérateur. En effet, le serveur ne reçoit pas de référence lui permettant d'identifier ce profil d'accès pour ce premier module de sécurité, contrairement à la technique antérieure. Le serveur doit alors interroger un opérateur de réseau pour obtenir les données nécessaires à la distribution du profil d'accès. Le serveur de contrôle identifié peut alors fournir en réponse, si un tel téléchargement est autorisé, ces données nécessaires à la distribution du profil d'accès.

Cette technique n'implique pas la transmission, en dehors d'interfaces protégées, d'identifiant sensible, tel que l'identifiant d'accès de l'utilisateur auprès de l'opérateur de réseau. Cet identifiant d'accès est plus généralement connu sous le nom d'IMSI (pour «International Mobile Subscriber Identity ») et permet d'identifier de manière unique l'utilisateur dans le réseau de l'opérateur.

Les différents modes ou caractéristiques de réalisation mentionnés ci-après peuvent être ajoutés indépendamment ou en combinaison les uns avec les autres, au procédé d'obtention d'un profil d'accès tel que défini précédemment.

Dans un mode de réalisation particulier du procédé d'obtention, le deuxième dispositif utilisateur obtient du deuxième module de sécurité l'adresse de contact.

Avant la mise en œuvre du procédé d'obtention, le deuxième module de sécurité a obtenu un profil d'accès à partir du serveur chargé de la distribution de profils d'accès et peut ainsi fournir l'adresse de contact de ce serveur. Ceci simplifie la mise en œuvre du procédé pour l'utilisateur ou le gestionnaire de flotte.

Dans un mode de réalisation particulier du procédé d'obtention, le deuxième dispositif utilisateur obtient du deuxième module de sécurité la donnée permettant au serveur d'interroger le serveur de contrôle.

Le deuxième module de sécurité, une fois un profil d'accès téléchargé, est identifié par un identifiant de profil d'accès ICCID (pour « Integrated Circuit Card ID ») qui est unique. Il est ainsi possible de déduire la donnée permettant au serveur d'interroger le serveur de contrôle à partir de cet identifiant ICCID. Ceci simplifie la mise en œuvre du procédé pour l'utilisateur ou le gestionnaire de flotte.

Dans un mode de réalisation particulier du procédé d'obtention, des données associées à un profil d'accès comprennent l'adresse de contact et la donnée permettant au serveur d'interroger le serveur de contrôle.

L'adresse de contact du serveur ainsi que la donnée permettant au serveur d'interroger le serveur de contrôle sont par exemple mémorisées dans des données du profil d'accès qui est téléchargé. Ceci permet au deuxième module de sécurité, qui a mémorisé un profil d'accès, de fournir aisément ces données permettant au premier module de sécurité d'obtenir son propre profil d'accès. Un troisième module de sécurité peut alors être associé également à cette souscription en mettant de nouveau en œuvre le procédé d'obtention de profil d'accès indifféremment à partir du premier module de sécurité ou du deuxième module de sécurité.

Dans un mode de réalisation particulier du procédé d'obtention, la donnée permettant au serveur d'interroger le serveur de contrôle permet en outre au serveur de contrôle d'identifier la souscription. A titre illustratif, le serveur de contrôle peut déterminer à partir de l'identifiant de profil d'accès ICCID quelle est la souscription associée. L'utilisateur ou le gestionnaire de flotte n'a ainsi pas besoin de fournir un identifiant de souscription.

Dans un mode de réalisation particulier du procédé d'obtention, le message envoyé comprend en outre un identifiant de souscription auprès de l'opérateur.

Dans ce mode de réalisation, la donnée permettant au serveur d'interroger le serveur de contrôle permet d'identifier l'opérateur de réseau et l'identifiant de souscription est fourni en complément.

Selon un deuxième aspect, l'invention concerne également un dispositif utilisateur, dit deuxième dispositif utilisateur, auquel est associé un module de sécurité, dit deuxième module de sécurité. Ce deuxième dispositif comprend :
- un premier module, agencé pour recevoir une commande d'association d'un premier dispositif utilisateur à une souscription auprès d'un opérateur comprenant au moins ledit deuxième dispositif utilisateur, le deuxième module de sécurité ayant obtenu un profil d'accès au réseau en relation avec ladite souscription ;
- un module de commande, agencé pour envoyer au premier dispositif utilisateur un message comprenant une adresse de contact d'un serveur configuré pour fournir par téléchargement un profil d'accès et une donnée permettant au serveur d'interroger un serveur de contrôle pour obtenir un ordre de téléchargement d'un profil d'accès pour un premier module de sécurité associé au premier dispositif, ledit message étant destiné à déclencher un envoi par ledit premier module de sécurité d'une requête d'obtention de profil d'accès en association avec ladite souscription, la requête étant adressée à l'adresse de contact du serveur et comprenant ladite donnée permettant audit serveur d'interroger le serveur de contrôle ;
ledit module de commande étant en outre agencé pour recevoir en provenance du premier dispositif utilisateur une confirmation d'un téléchargement du profil d'accès dans le premier module de sécurité.

Ce dispositif utilisateur peut bien sûr comporter en termes structurels les différentes caractéristiques relatives au procédé d'obtention d'un profil d'accès tel que décrit précédemment, qui peuvent être combinées ou prises isolément. Ainsi, les avantages énoncés pour le procédé d'obtention d'un profil d'accès selon le premier aspect sont transposables directement au dispositif utilisateur. Par conséquent, ils ne sont pas détaillés plus amplement.

Selon un troisième aspect, l'invention concerne également un serveur configuré pour fournir par téléchargement un profil d'accès. Ce serveur comprend :
- un module de réception, agencé pour recevoir une requête d'obtention de profil d'accès en association avec une souscription auprès d'un opérateur en provenance d'un premier module de sécurité associé à un premier dispositif utilisateur, la souscription comprenant au moins un deuxième dispositif utilisateur auquel un deuxième module de sécurité est associé, le serveur ayant fourni par téléchargement au deuxième module de sécurité un profil d'accès au réseau en relation avec ladite souscription, la requête étant adressée à l'adresse de contact du serveur et comprenant une donnée permettant audit serveur d'interroger un serveur de contrôle pour obtenir un ordre de téléchargement du profil d'accès ;
- un module d'interrogation, agencé pour, en fonction de la donnée reçue, interroger le serveur de contrôle pour obtenir un ordre de téléchargement du profil d'accès dans le premier module de sécurité ;
- un module de téléchargement, agencé pour télécharger le profil d'accès dans le premier module de sécurité sur obtention d'un ordre en provenance du serveur de contrôle, une confirmation étant envoyée par le premier dispositif utilisateur au deuxième dispositif utilisateur une fois le profil téléchargé.

Dans un mode de réalisation particulier, l'invention concerne également un serveur configuré pour fournir par téléchargement un profil d'accès. Ce serveur comprend :
- un module de réception, agencé pour recevoir une requête d'obtention de profil d'accès en association avec une souscription auprès d'un opérateur en provenance d'un premier module de sécurité associé à un premier dispositif utilisateur, la souscription comprenant au moins un deuxième dispositif utilisateur auquel un deuxième module de sécurité est associé, le deuxième module de sécurité ayant obtenu un profil d'accès au réseau en relation avec ladite souscription, la requête étant adressée à l'adresse de contact du serveur et comprenant une donnée permettant audit serveur d'interroger un serveur de contrôle pour obtenir un ordre de téléchargement du profil d'accès, l'adresse de contact et ladite donnée ayant été reçues par le premier dispositif utilisateur dans un message envoyé par le deuxième dispositif utilisateur ;
- un module d'interrogation, agencé pour interroger le serveur de contrôle pour obtenir un ordre de téléchargement du profil d'accès dans le premier module de sécurité ;
- un module de téléchargement, agencé pour télécharger le profil d'accès dans le premier module de sécurité sur obtention d'un ordre en provenance du serveur de contrôle, une confirmation étant envoyée par le premier dispositif utilisateur au deuxième dispositif utilisateur une fois le profil téléchargé.

Ce serveur est un serveur chargé de la préparation des données de gestion de souscription SM-DP+. Les avantages énoncés pour le procédé d'obtention d'un profil d'accès selon le premier aspect sont transposables directement au serveur. Par conséquent, ils ne sont pas détaillés plus amplement.

Selon un quatrième aspect, l'invention concerne également un système comprenant un dispositif utilisateur selon le deuxième aspect, dit deuxième dispositif utilisateur, et un serveur configuré pour fournir par téléchargement un profil d'accès selon le troisième aspect. Ce système comprend en outre un premier dispositif utilisateur auquel un premier module de sécurité est associé, formant un premier terminal comprenant :
- un module de communication, agencé pour recevoir en provenance du deuxième dispositif utilisateur un message comprenant une adresse de contact d'un serveur configuré pour fournir par téléchargement un profil d'accès et une donnée permettant au serveur d'interroger un serveur de contrôle pour obtenir un ordre de téléchargement d'un profil d'accès pour le premier module de sécurité ;
- un module d'obtention de profil, agencé pour envoyer une requête d'obtention de profil d'accès en association avec une souscription auprès d'un opérateur, la souscription comprenant au moins le deuxième dispositif utilisateur auquel le deuxième module de sécurité est associé, la requête étant adressée à l'adresse de contact du serveur et comprenant ladite donnée, et pour télécharger le profil d'accès dans le premier module de sécurité ;
ledit module de communication étant en outre agencé pour envoyer au deuxième dispositif utilisateur une confirmation d'un téléchargement du profil d'accès dans le premier module de sécurité.

Les avantages énoncés pour le procédé d'obtention d'un profil d'accès selon le premier aspect sont transposables directement au système. Par conséquent, ils ne sont pas détaillés plus amplement.

Selon un cinquième aspect, l'invention concerne un programme pour un dispositif utilisateur, comprenant des instructions de code de programme destinées à commander l'exécution de celles des étapes du procédé d'obtention d'un profil d'accès précédemment décrit mises en œuvre par le dispositif utilisateur, lorsque ce programme est exécuté par ce dispositif et un support d'enregistrement lisible par un serveur sur lequel est enregistré un programme pour un dispositif.

Les avantages énoncés pour le procédé d'obtention d'un profil d'accès selon le premier aspect sont transposables directement au programme pour un dispositif et au support d'enregistrement.

Selon un sixième aspect, l'invention concerne un programme pour un serveur, comprenant des instructions de code de programme destinées à commander l'exécution de celles des étapes du procédé d'obtention d'un profil d'accès précédemment décrit mises en œuvre par le serveur, lorsque ce programme est exécuté par ce serveur et un support d'enregistrement lisible par un serveur sur lequel est enregistré un programme pour un serveur.

Les avantages énoncés pour le procédé d'obtention d'un profil d'accès selon le premier aspect sont transposables directement au programme pour un serveur et au support d'enregistrement.

La technique d'obtention d'un profil d'accès à un réseau de communication pour un premier module de sécurité sera mieux comprise à l'aide de la description suivante de modes de réalisation particuliers, en référence aux dessins annexés sur lesquels :
- la figure 1 représente un environnement dans lequel est mis en œuvre le procédé d'obtention d'un profil d'accès dans un mode de réalisation particulier ;
- la figure 2 illustre des étapes d'un procédé d'obtention d'un profil d'accès à un réseau de communication selon un mode particulier de réalisation ;
- la figure 3 représente un dispositif utilisateur selon un mode particulier de réalisation ;
- la figure 4 représente un serveur selon un mode particulier de réalisation.

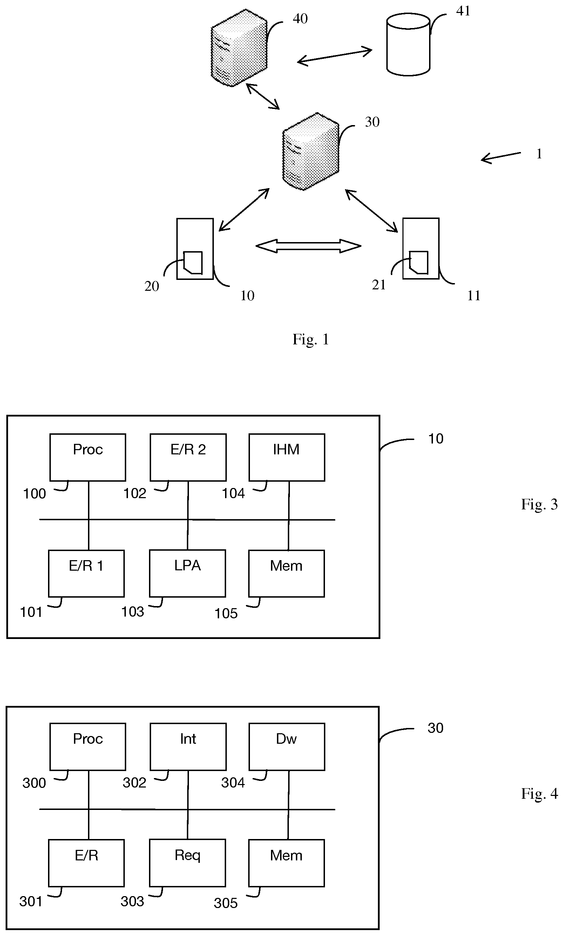

La **figure 1** représente un environnement dans lequel est mis en œuvre le procédé d'obtention d'un profil d'accès à un réseau de communication pour un premier module de sécurité dans un mode de réalisation particulier.

Dans la suite de la description, on présente des exemples de plusieurs modes de réalisation s'appliquant à un module de sécurité de type carte eUICC tel qu'en cours de normalisation dans le cadre de l'association GSMA, mais le procédé d'obtention d'un profil d'accès s'applique également à d'autres types de module de sécurité. Plus généralement, le module de sécurité est une plateforme dédiée inviolable, comprenant du matériel et du logiciel, apte à héberger de manière sécurisée des applications et leurs données confidentielles et cryptographiques et fournissant un environnement d'exécution d'applications sécurisé, par exemple une carte de type UICC.

La description qui suit se place dans le contexte des spécifications techniques, telles que définies par l'association GSMA. Plus précisément, l'architecture de la gestion de configuration à distance est définie dans la spécification technique SGP.21 « RSP Architecture », version 2.0, datée du 23 août 2016 et les procédures sont définies dans la spécification technique SGP.22 « RSP Technical Spécification » version 2.0 datée du 14 octobre 2016.

Un dispositif utilisateur 10, auquel un module de sécurité 20 est associé, est agencé pour accéder au réseau d'un opérateur mobile au moyen d'un profil d'accès au réseau généré par cet opérateur pour ce module de sécurité. Le dispositif utilisateur 10 en association avec le module de sécurité 20 forment un premier terminal mobile. Plus précisément, le profil d'accès est généré pour ce module de sécurité par un serveur de gestion de données de souscription, non représenté sur la figure 1, lié à l'opérateur. Le profil d'accès comprend une application d'accès au réseau et des données d'accès associées (on parle de « credentials » en anglais), telles que des clés cryptographiques et des algorithmes. Le profil d'accès une fois autorisé permet un accès à une infrastructure d'un réseau mobile de cet opérateur. Il permet notamment d'authentifier le terminal mobile, plus précisément le module de sécurité 20 lors d'un accès au réseau de l'opérateur. Un deuxième dispositif utilisateur 11 et son module de sécurité 21 associé sont également représentés sur la figure 1. Le dispositif utilisateur 11 en association avec le module de sécurité 21 forment un deuxième terminal mobile.

Le réseau de communication de l'opérateur mobile, appelé réseau mobile, est par exemple un réseau de communication sans fil de type 3G ou 4G, tel que normalisé par le 3GPP. Les dispositifs utilisateur 10, 11 comprennent chacun un premier module de communication, agencé pour accéder au réseau de communication.

Le profil d'accès est identifié par un numéro unique ICCID (pour « Integrated Circuit Card ID ») permettant d'identifier le profil d'accès dans un module de sécurité.

Le module de sécurité 20, 21 est typiquement une carte de type « eUICC » (de l'anglais « embedded Universal Integrated Circuit Card »), également appelée « eSIM » (de l'anglais « embedded Subscriber Identity Module »), ou carte SIM embarquée ou inamovible. Aucune limitation n'est attachée à ce type de carte. Dans un mode de réalisation particulier, le module de sécurité 20, 21 est une carte à puce avec un système d'exploitation offrant les fonctionnalités d'une carte de type eUICC. Dans un autre mode de réalisation particulier, le module de sécurité 20, 21 est intégré dans le dispositif utilisateur 10, 11 formant ainsi une seule entité. Chaque module de sécurité 20, 21 est identifié par un identifiant de module de sécurité EID (pour « eUICC-ID »).

Sur la figure 1 est également représenté un serveur de contrôle 40, par exemple intégré au système d'information de l'opérateur de réseau. Ce serveur de contrôle 40 est agencé pour coordonner les différentes opérations de configuration dans le système d'information et dans le réseau de l'opérateur lors d'une souscription d'un nouvel utilisateur, d'une modification d'une souscription ou bien lors d'une obtention d'un profil d'accès. Le serveur de contrôle 40 interagit en particulier avec un serveur 30 apte à fournir par téléchargement à un module de sécurité un profil d'accès qui a été préparé pour lui. Ce serveur est chargé de la préparation des données de gestion de souscription SM-DP+ (pour « Subscription Manager Data Préparation »). Le rôle de ce serveur est de :
- préparer des dossiers de profil (« Profile Package » en anglais),
- mémoriser des clés de protection de profil de manière sécurisée et des dossiers de profil protégés dans une zone mémoire, et
- allouer des dossiers de profil en fonction d'un identifiant de module de sécurité.

Le serveur 30 lie un dossier de profil protégé à un module de sécurité et télécharge, une fois une session sécurisée de téléchargement établie, ce ou ces profils d'accès liés à une application LPA (pour « Local Profile Assistant ») s'exécutant sur le dispositif utilisateur.

Sur la figure 1, figure également une base de données 41 accessible par le serveur de contrôle 40. Cette base de données 41 est un référentiel permettant de mémoriser des informations de souscription pour cet opérateur.

Il est ici souligné que par souci de simplification, d'autres équipements notamment en charge de l'exploitation et de la maintenance, de la facturation, de la prise de commande, ... ne sont pas représentés sur cette figure 1. Il en est de même pour des équipements du réseau de l'opérateur.

Les dispositifs utilisateur 10, 11 comprennent également un deuxième module de communication, leur permettant de communiquer en direct (c'est-à-dire sans passer par le réseau de communication mobile). Les deux dispositifs utilisateur 10, 11 se trouvent ainsi à proximité l'un de l'autre. Dans un mode de réalisation particulier, il s'agit d'un module de communication en champ proche, par exemple d'un module NFC, pour « Near Field Communication ». Dans un autre mode de réalisation particulier, il s'agit d'un module de communication radio de courte portée de type WiFi, Bluetooth. Dans encore un autre mode de réalisation, il s'agit d'un module de communication filaire.

Les différents échanges entre les deux dispositifs utilisateur 10, 11 sont portés par un canal de communication, établi au moyen du deuxième module de communication.

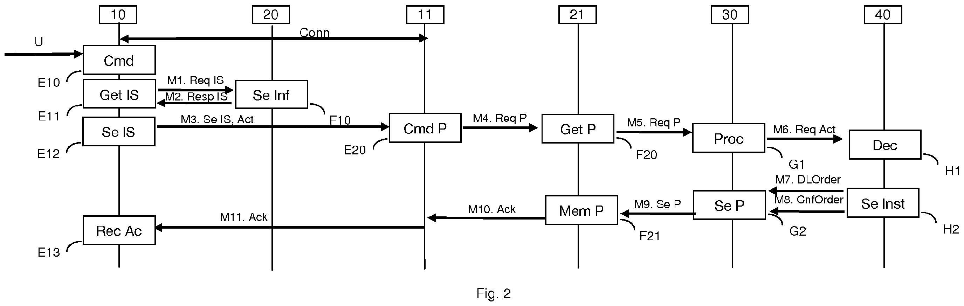

Le procédé d'obtention d'un profil d'accès à un réseau de communication pour le deuxième module de sécurité 21 va maintenant être décrit en relation avec la **figure 2****.**

A l'état initial, on suppose que l'utilisateur du dispositif utilisateur 10 et du premier module de sécurité 20 a souscrit à un abonnement auprès d'un opérateur de réseau de communication. En retour, il a obtenu un code d'activation AC (pour « Activation Code ») qui lui a permis d'installer sur le premier module de sécurité 20 un profil d'accès au réseau ICCID1. Une fois le profil d'accès installé, l'utilisateur peut accéder au réseau de communication et à des services fournis par l'opérateur du réseau dans le cadre de son contrat de souscription. Le premier module de sécurité 20 a ainsi obtenu un profil d'accès au réseau en relation avec cette souscription.

Un canal de communication direct, représenté par une flèche sur les figures 1 et 2, est établi entre les premier 10 et deuxième 11 dispositifs utilisateur.

Un utilisateur ou un gestionnaire de flotte a décidé d'ajouter le deuxième dispositif utilisateur 11, plus précisément le deuxième module de sécurité 21, à cette souscription. Dans un mode de réalisation particulier, la souscription permet d'associer une pluralité de modules de sécurité (dite « multi-SIM »). Dans un autre mode de réalisation particulier, la souscription permet d'associer un unique module de sécurité. Une modification de la souscription est alors requise. Dans un autre mode de réalisation, l'utilisateur ou le gestionnaire de flotte a décidé de transférer l'accès au réseau du premier module de sécurité 20 au deuxième module de sécurité 21 dans le cadre de sa souscription auprès de l'opérateur. D'autres cas d'usage de cette technique d'obtention d'un profil d'accès peuvent également être envisagés.

Cette commande d'association du deuxième dispositif utilisateur 11, plus précisément du deuxième module de sécurité 21, peut être transmise au moyen d'une interface homme-machine d'une application proposée par l'opérateur sur le premier dispositif utilisateur 10. Aucune limitation n'est attachée à la manière de transmettre cette commande. Dans un mode de réalisation particulier, cette application proposée par l'opérateur correspond à l'application LPA. Quatre choix peuvent être proposés dans un menu d'interaction : « ajouter un deuxième module de sécurité à ma souscription », « souscrire à une option multi-modules de sécurité à partir de ma souscription actuelle », « transférer ma souscription vers un nouveau module de sécurité », « suspendre un profil d'accès ».

Le premier dispositif utilisateur 10 reçoit ainsi dans une étape E10 une commande d'association du deuxième dispositif utilisateur 11 à une souscription auprès de l'opérateur.

Dans une étape E11, le premier dispositif utilisateur 10, plus précisément l'application LPA, demande par un message M1 au premier module de sécurité 20 de lui fournir l'adresse de contact du serveur 30 configuré pour fournir par téléchargement un profil d'accès, une donnée d'identification et un identifiant de souscription ID_S. La donnée d'identification permet au serveur SM-DP+ 30 de déterminer (notamment lorsque ce serveur SM-DP+ est partagé par plusieurs opérateurs) puis d'interroger le serveur de contrôle 40 pour obtenir un ordre de téléchargement du profil d'accès, comme décrit ultérieurement. Elle correspond par exemple à un identifiant de l'opérateur. L'identifiant de souscription ID_S permet d'identifier la souscription qui est associée à la demande d'obtention de profil d'accès. Dans un exemple de réalisation, l'identifiant de souscription correspond à un numéro de contrat dans le système d'information de l'opérateur. Le numéro de contrat est par exemple mémorisé dans le profil d'accès au moyen d'une action de personnalisation de celui-ci, nécessitant une génération dynamique du profil d'accès. Dans un autre exemple de réalisation, l'identifiant de souscription correspond à l'identifiant du profil d'accès ICCID1 qui a été téléchargé dans le premier module de sécurité 20.

On se place par la suite dans le cas où ces informations ont été fournies au premier module de sécurité 20 lors de la distribution du profil d'accès ICCID1 dans des données associées à ce profil d'accès. Ces données sont renseignées par l'opérateur. La donnée d'identification peut par exemple correspondre à un identifiant d'opérateur dans les données. Dans un autre exemple de réalisation, la donnée d'identification correspond à un champ « Service Provider Name » présent dans des métadonnées associées au profil d'accès. Dans un autre exemple de réalisation, la donnée d'identification correspond au couple MCC (pour « Mobile Country Code »), MNC (pour « Mobile Network Code »).

Le message M1 est reçu par le premier module de sécurité 20 dans une étape F10. En réponse, le premier module de sécurité 20 envoie un message M2, comprenant l'adresse de contact du serveur SM-DP+ 30, la donnée d'identification et l'identifiant de souscription ID_S.

Dans une étape E12, le premier dispositif utilisateur 10, plus précisément l'application LPA de ce dispositif, envoie un message M3 au deuxième dispositif utilisateur 11, plus précisément l'application LPA s'exécutant sur ce deuxième dispositif. Ce message M3 porte une information relative à une action à exécuter et comprend notamment l'adresse de contact du serveur SM-DP+, la donnée d'identification et l'identifiant de souscription ID_S. Il est destiné à déclencher un envoi par le deuxième module de sécurité 21 d'une requête d'obtention de profil d'accès en association avec la souscription ID_S.

Le message M3 est reçu dans une étape E20 par le deuxième dispositif utilisateur 11, plus précisément l'application LPA. Toujours au cours de cette étape E20, le deuxième dispositif utilisateur 11 envoie au deuxième module de sécurité 21 un message M4, comprenant les données reçues dans le message M3, notamment l'information relative à une action à exécuter, l'adresse de contact du serveur SM-DP+, la donnée d'identification permettant au serveur SM-DP+ 30 d'interroger le serveur de contrôle 40 et l'identifiant de souscription ID_S. Ce message M4 commande au deuxième module de sécurité 21 d'obtenir un profil d'accès auprès du serveur SM-DP+ 30 dont l'adresse de contact est fournie dans le message M4.

Le message M4 est reçu par le deuxième module de sécurité 21 dans une étape F20. Toujours dans cette étape F20, le deuxième module de sécurité 21 envoie un message M5 de demande de profil d'accès au serveur SM-DP+ 30 par l'intermédiaire du deuxième dispositif utilisateur 11. Plus précisément, comme illustré à la figure 10 « Common Mutual Authentication Procédure » de la spécification technique SGP 22 v2.0, ce message est envoyé dans un premier tunnel établi entre le dispositif utilisateur 11, plus précisément l'application LPA s'exécutant sur le dispositif utilisateur 11 et le serveur SM-DP+ 30, s'appuyant sur un deuxième tunnel établi entre le module de sécurité 21 et le serveur SM-DP+ 30. On souligne ici que par simplification, la figure 2 représente une relation directe entre le module de sécurité 21 et le serveur SMDP+ 30 alors que le message M5 transite par le dispositif utilisateur 11 pour atteindre le serveur SMPD+ 30. Ce message M5 est adressé au serveur SM-DP+ 30 à l'adresse de contact et comprend notamment l'action à exécuter, la donnée d'identification permettant au serveur SM-DP+ 30 d'interroger le serveur de contrôle 40, l'identifiant de souscription ID_S et l'identifiant de module de sécurité EID, associé à l'action à exécuter. L'identifiant de module de sécurité EID correspond à celui du deuxième module de sécurité 21.

Ce message M5 est reçu par le serveur SM-DP+ 30 dans une étape G1. Le serveur SM-DP+ 30 détermine qu'il ne dispose pas des informations nécessaires à la distribution du profil d'accès. En effet, ce message M5 ne comprend pas d'informations permettant au serveur SM-DP+ 30 d'identifier un profil d'accès à télécharger. Le serveur SM-DP+ 30 envoie alors un message M6 au serveur de contrôle 40 de l'opérateur identifié par la donnée d'identification reçue. Ce message M6 comprend notamment l'action à exécuter, l'identifiant de souscription ID_S et l'identifiant de module de sécurité EID. L'interface entre le serveur SM-DP+ 30 et le serveur de contrôle 40, appelée interface ES2+ et définie dans les spécifications de l'Association GSMA, est ainsi adaptée pour permettre l'envoi du message M6, permettant au serveur SM-DP+ 30 de solliciter le serveur de contrôle 40 lorsqu'aucun profil d'accès n'est identifié dans une demande de profil d'accès.

Le message M6 est reçu par le serveur de contrôle 40 dans une étape H1. Le serveur de contrôle 40 détermine en fonction de l'action à exécuter et de la souscription courante, reçues dans le message M6, les actions qui doivent être mises en œuvre dans le système d'information de l'opérateur. Ces actions ne sont pas plus détaillées ici. On se place par la suite dans le cas où les mécanismes de décision mis en œuvre par le serveur de contrôle 40 ont conduit à une décision de télécharger, et le cas échéant de générer, un profil d'accès.

Dans une étape H2, le serveur de contrôle 40 envoie un message M7 au serveur SM-DP+ 30. Plus précisément, ce message M7 correspond à un message « ES2+.DownloadOrder » et donne instruction au serveur SM-DP+ d'une nouvelle requête de réservation de profil. Ce message M7 permet notamment au serveur SM-DP+ 30 de réserver un profil d'accès d'identifiant ICCID2. Le serveur SM-DP+ traite cette instruction dans une étape G2 en réservant le profil d'accès ICCID2 ou en le générant selon le mode de réalisation.

Toujours dans cette étape H2, le serveur de contrôle 40 envoie un message M8 au serveur SM-DP+ 30. Plus précisément, ce message M8 correspond à un message « ES2+.ConfirmOrder » et confirme l'ordre de téléchargement « ES2+.DownloadOrder ». Dans l'étape G2, le serveur SM-DP+ 30 télécharge le profil d'accès ICCID2 (message M9) sur le deuxième module de sécurité 21.

Le profil d'accès ICCID2 est reçu et mémorisé par le deuxième module de sécurité 21 dans une étape F21.

Dans un mode de réalisation particulier, le profil d'accès ICCID2 comprend dans des données associées au profil d'accès l'adresse de contact du serveur 30 configuré pour fournir par téléchargement un profil d'accès, une donnée d'identification et un identifiant de souscription. Ceci permet de mettre en œuvre le procédé d'obtention d'un profil d'accès pour un troisième module de sécurité, aussi bien à partir du premier terminal ou dispositif utilisateur 10 que du deuxième terminal ou dispositif utilisateur 11.

Une fois le profil d'accès ICCID2 téléchargé et installé, le deuxième module de sécurité 21 envoie une confirmation (message M10) au deuxième dispositif utilisateur 11 de l'exécution du message M4 de commande d'obtention d'un profil d'accès auprès du serveur SM-DP+ 30.

Le deuxième dispositif utilisateur 11 envoie alors une confirmation (message M11) au premier dispositif utilisateur 10, qui la reçoit dans une étape E13. Ce message de confirmation est une confirmation d'un téléchargement du profil d'accès ICCID2 dans le deuxième module de sécurité 21. Le premier dispositif utilisateur 10 peut alors en informer l'utilisateur ou le gestionnaire de flotte par l'intermédiaire de son interface homme-machine. Il est ici souligné que l'installation avec succès du profil d'accès déclenche un envoi d'une confirmation (non représentée sur la figure 2) au serveur SM-DP+ 30. Ce dernier envoie alors un message « ES2+. HandleDownloadProgressInfo » au serveur de contrôle 30 informant ainsi l'opérateur du résultat du téléchargement et permettant à ce dernier de poursuivre le traitement de l'action le cas échéant.

Dans le mode de réalisation décrit, le message M5, adressé au serveur SM-DP+ 30 à l'adresse de contact, comprend l'action à exécuter, la donnée d'identification, l'identifiant de souscription et l'identifiant de module de sécurité, associé à l'action à exécuter. Dans un autre mode de réalisation, le message M5 est une requête d'obtention d'un profil d'accès, comprenant la donnée d'identification, l'identifiant de souscription et l'identifiant de module de sécurité, associé à l'action à exécuter.

Dans le mode de réalisation décrit, l'adresse de contact du serveur SM-DP+, la donnée d'identification et la donnée de souscription ID_S ont été fournies dans des données associées au profil d'accès lors du téléchargement de celui-ci dans le premier module de sécurité 20.

Dans un autre mode de réalisation, seule l'adresse de contact du serveur SM-DP+ est fournie dans des données associées au profil d'accès lors du téléchargement de celui-ci dans le premier module de sécurité 20. L'identifiant de profil d'accès ICCID1 est transmis dans les différents messages échangés en tant que donnée permettant au serveur SM-DP+ d'identifier et d'interroger un serveur de contrôle et en tant qu'identifiant de souscription. Le serveur SM-DP+ 30 détermine à partir de l'identifiant de profil d'accès ICCID1 l'opérateur concerné et ainsi le serveur de contrôle à contacter. Le serveur de contrôle 40 peut obtenir à partir de l'identifiant de profil d'accès ICCID1 le numéro de contrat associé par interrogation de la base de données 41. Ceci permet de limiter les modifications à apporter au profil d'accès.

Dans un autre mode de réalisation, la donnée d'identification est obtenue par un des équipements (dispositif utilisateur 10, 11, serveur SM-DP+ 30) à partir de l'identifiant d'accès au réseau, connu sous le nom IMSI, notamment à partir des champs MCC et MNC.

Il est ici souligné que le deuxième module de sécurité 21 envoie un message à destination du serveur SM-DP+ par l'intermédiaire du deuxième dispositif utilisateur 11. A ce stade, aucun profil d'accès n'est téléchargé et ni installé pour ce deuxième terminal. Ce deuxième terminal ne peut donc pas communiquer par l'intermédiaire du réseau de communication. Dans un mode de réalisation particulier, les échanges se font au moyen d'un canal de communication de type WiFi établi dans un réseau local. Dans un autre mode de réalisation, le premier terminal, formé du dispositif utilisateur 10 et du module de sécurité 20, sert de relais vers le serveur SM-DP+ 30 via le réseau de communication mobile et les échanges se font au moyen d'un canal de communication établi entre les premier 10 et deuxième 11 dispositifs utilisateur.

Dans un mode de réalisation particulier, l'identifiant de souscription ID_S est renseigné par l'utilisateur ou le gestionnaire de flotte au moyen de l'interface homme-machine de l'application proposée par l'opérateur sur le premier dispositif utilisateur 10 en complément de la commande d'association.

Dans un mode de réalisation particulier, un code de sécurité est fourni par l'utilisateur au moyen de l'interface homme-machine d'une application proposée par l'opérateur sur le premier dispositif utilisateur 10. Ce code de sécurité peut par exemple être fourni en même temps que la commande d'association. Dans une variante de réalisation, le code de sécurité est vérifié par le module de sécurité 20. Dans une autre variante de réalisation, le code de sécurité est transmis dans les différents messages M3 (du dispositif utilisateur 10 au dispositif utilisateur 11), M4 (du dispositif utilisateur 11 au module de sécurité 21), M5 (du module de sécurité 21 au serveur SM-DP+ 30) et M6 (du serveur SM-DP+ 30 au serveur de contrôle 40). Le serveur de contrôle 40 vérifie alors le code de sécurité lors de l'étape H1. Ce code de sécurité permet de vérifier que l'action a bien été demandée par un utilisateur autorisé. Il est ici souligné que ce code de sécurité peut dans certains modes particuliers de réalisation correspondre à celui du module de sécurité ou bien celui du dispositif utilisateur.

Aucune limitation n'est attachée à ces différents modes de réalisation et l'homme du métier est à même d'en définir d'autres permettant de commander un téléchargement d'un profil d'accès pour un module de sécurité à partir d'un dispositif utilisateur auquel est associé un autre module de sécurité avec un profil d'accès installé dans le cadre d'une souscription.

La **figure 3** illustre de manière schématique un dispositif utilisateur 10 dans un mode de réalisation particulier. Un module de sécurité 20 est associé à ce dispositif utilisateur 10. Ce module de sécurité 20 a obtenu un profil d'accès à un réseau de communication en relation avec une souscription pour le dispositif utilisateur 10 auprès d'un opérateur. Le dispositif utilisateur 10 comprend notamment :
- un processeur 100 pour exécuter des instructions de code de modules logiciels ;
- une zone mémoire 105, agencée pour mémoriser une application qui comprend des instructions de code pour mettre en œuvre les étapes du procédé d'obtention d'un profil d'accès ;
- une mémoire de stockage, non représentée, agencée pour stocker des données utilisées lors de la mise en œuvre du procédé d'obtention ;
- un premier module 101 de communication, agencé pour accéder à un réseau de communication ;
- un deuxième module 102 de communication, agencé pour communiquer avec un deuxième dispositif utilisateur ;
- un module 104 d'interaction, agencé pour recevoir une commande d'association d'un deuxième dispositif utilisateur 11 à cette souscription ;
- un module de commande 103, agencé pour envoyer au deuxième dispositif utilisateur un message comprenant une adresse de contact d'un serveur 30 configuré pour fournir par téléchargement un profil d'accès et une donnée permettant au serveur d'interroger un serveur de contrôle 40 pour obtenir un ordre de téléchargement d'un profil d'accès pour un deuxième module de sécurité 21 associé au deuxième dispositif, ledit message étant destiné à déclencher un envoi par ledit deuxième module de sécurité d'une requête d'obtention de profil d'accès en association avec ladite souscription, la requête étant adressée à l'adresse de contact du serveur et comprenant ladite donnée permettant audit serveur d'interroger le serveur de contrôle.

Le module de commande 103 est en outre agencé pour recevoir en provenance du deuxième dispositif utilisateur une confirmation d'un téléchargement du profil d'accès dans le deuxième module de sécurité.

Dans un mode particulier de réalisation, le module de commande 103 est en outre agencé pour obtenir l'adresse de contact du module de sécurité.

Dans un mode particulier de réalisation, le module de commande 103 est en outre agencé pour obtenir la donnée permettant au serveur d'interroger le serveur de contrôle du module de sécurité.

Dans un mode de réalisation particulier, le module de commande 103 est également agencé pour mettre en œuvre une application LPA.

Dans un mode de réalisation particulier, le module d'interaction 104 est agencé pour interagir avec un utilisateur du dispositif utilisateur 10 par l'intermédiaire d'une interface homme-machine.

Il est ici souligné que le dispositif utilisateur 10 comprend également d'autres modules de traitement, non représentés sur la figure 3, agencés pour mettre en œuvre les différentes fonctions de dispositif utilisateur.

La **figure 4** illustre de manière schématique un serveur 30 configuré pour fournir par téléchargement un profil d'accès dans un mode de réalisation particulier. Plus précisément, ce serveur 30 est un serveur SM-DP+, chargé de la préparation des données de gestion de souscription. Le serveur 30 comprend notamment :
- un processeur 300 pour exécuter des instructions de code de modules logiciels ;
- une zone mémoire 305, agencée pour mémoriser une application qui comprend des instructions de code pour mettre en œuvre les étapes du procédé d'obtention d'un profil d'accès ;
- une mémoire de stockage, non représentée, agencée pour stocker des données utilisées lors de la mise en œuvre du procédé d'obtention ;
- un module 301 de communication, agencé pour communiquer avec des modules de sécurité et avec des serveurs d'un opérateur ;
- un module 303 de réception, agencé pour recevoir une requête d'obtention de profil d'accès en association avec une souscription auprès d'un opérateur en provenance d'un premier module de sécurité 21 associé à un premier dispositif utilisateur 11, la souscription comprenant au moins un deuxième dispositif utilisateur 10 auquel un deuxième module de sécurité 20 est associé, le deuxième module de sécurité ayant obtenu un profil d'accès au réseau en relation avec ladite souscription, la requête étant adressée à l'adresse de contact du serveur et comprenant une donnée permettant audit serveur d'interroger un serveur de contrôle 40 pour obtenir un ordre de téléchargement du profil d'accès et étant adressée à une adresse de contact du serveur, l'adresse de contact et ladite donnée ayant été reçues par le premier dispositif utilisateur dans un message envoyé par le deuxième dispositif utilisateur ;
- un module 302 d'interrogation, agencé pour interroger le serveur de contrôle pour obtenir un ordre de téléchargement du profil d'accès dans le premier module de sécurité ;
- un module 304 de téléchargement, agencé pour télécharger le profil d'accès dans le premier module de sécurité sur obtention d'un ordre en provenance du serveur de contrôle, une confirmation étant envoyée par le premier dispositif utilisateur au deuxième dispositif utilisateur une fois le profil téléchargé.

Il est ici souligné que le serveur 30 comprend également d'autres modules de traitement, non représentés sur la figure 4, agencés pour mettre en œuvre les différentes fonctions de serveur SM-DP+.

La technique d'obtention d'un profil d'accès est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 103, 104 sont agencés pour mettre en œuvre le procédé d'obtention précédemment décrit. Il s'agit de préférence de modules logiciels comprenant des instructions logicielles pour faire exécuter celles des étapes du procédé d'obtention d'un profil d'accès précédemment décrit, mises en œuvre par un dispositif utilisateur. L'invention concerne donc aussi :
- un programme pour un dispositif utilisateur, comprenant des instructions de code de programme destinées à commander l'exécution des étapes du procédé d'obtention d'un profil d'accès précédemment décrit, lorsque ledit programme est exécuté par ce dispositif ;
- un support d'enregistrement lisible par un dispositif sur lequel est enregistré le programme pour un dispositif.

Dans un mode de réalisation particulier, les modules 302, 303, 304 sont agencés pour mettre en œuvre le procédé d'obtention précédemment décrit. Il s'agit de préférence de modules logiciels comprenant des instructions logicielles pour faire exécuter celles des étapes du procédé d'obtention d'un profil d'accès précédemment décrit, mises en œuvre par un serveur. L'invention concerne donc aussi :
- un programme pour un serveur, comprenant des instructions de code de programme destinées à commander l'exécution des étapes du procédé d'obtention d'un profil d'accès précédemment décrit, lorsque ledit programme est exécuté par ce serveur ;
- un support d'enregistrement lisible par un serveur sur lequel est enregistré le programme pour un serveur.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne en outre un système 1 comprenant un premier dispositif utilisateur 10 et un serveur 30 configuré pour fournir par téléchargement un profil d'accès tels que décrits précédemment. Ce système comprend en outre un deuxième dispositif utilisateur 11 auquel un deuxième module de sécurité 21 est associé, formant un deuxième terminal comprenant :
- un module de communication, agencé pour recevoir en provenance du premier dispositif utilisateur un message comprenant une adresse de contact d'un serveur 30 configuré pour fournir par téléchargement un profil d'accès et une donnée permettant au serveur d'interroger un serveur de contrôle 40 pour obtenir un ordre de téléchargement d'un profil d'accès pour le deuxième module de sécurité ;
- un module d'obtention de profil, agencé pour envoyer une requête d'obtention de profil d'accès en association avec une souscription auprès d'un opérateur, la souscription comprenant au moins le premier dispositif utilisateur 10 auquel le premier module de sécurité 20 est associé, la requête étant adressée à l'adresse de contact du serveur et comprenant ladite donnée, et pour télécharger le profil d'accès dans le deuxième module de sécurité ;
ledit module de communication étant en outre agencé pour envoyer au premier dispositif utilisateur une confirmation d'un téléchargement du profil d'accès dans le deuxième module de sécurité.

## Revendications

1. Procédé d'obtention d'un profil d'accès à un réseau de communication pour un premier module de sécurité (21) associé à un premier dispositif utilisateur (11), ledit procédé comprenant pour un deuxième dispositif utilisateur (10) auquel un deuxième module de sécurité (20) est associé, le deuxième module de sécurité ayant obtenu un profil d'accès au réseau en relation avec une souscription auprès d'un opérateur, le procédé étant **caractérisé en ce que** :
- sur réception (E10) d'une commande d'association du premier dispositif utilisateur à ladite souscription, un envoi (E12) par le deuxième dispositif utilisateur au premier dispositif utilisateur, d'un message comprenant une adresse de contact d'un serveur (30) configuré pour fournir par téléchargement un profil d'accès et une donnée permettant au serveur d'interroger un serveur de contrôle (40) pour obtenir un ordre de téléchargement du profil d'accès,
ledit message étant destiné à déclencher un envoi par ledit premier module de sécurité d'une requête d'obtention de profil d'accès en association avec ladite souscription, la requête étant adressée à l'adresse de contact du serveur et comprenant ladite donnée permettant audit serveur d'interroger le serveur de contrôle ;
- une réception (E13) par le deuxième dispositif utilisateur en provenance du premier dispositif utilisateur d'une confirmation d'un téléchargement du profil d'accès dans le premier module de sécurité.

2. Procédé d'obtention selon la revendication 1, dans lequel le deuxième dispositif utilisateur obtient du deuxième module de sécurité l'adresse de contact.

3. Procédé d'obtention selon la revendication 1, dans lequel le deuxième dispositif utilisateur obtient du deuxième module de sécurité la donnée permettant au serveur d'interroger le serveur de contrôle.

4. Procédé d'obtention selon la revendication 1, dans lequel des données associées à un profil d'accès comprennent l'adresse de contact et la donnée permettant au serveur d'interroger le serveur de contrôle.

5. Procédé d'obtention selon la revendication 1, dans lequel le message envoyé comprend en outre un identifiant de souscription auprès de l'opérateur.

6. Procédé d'obtention d'un profil d'accès à un réseau de communication pour un premier module de sécurité (21) associé à un premier dispositif utilisateur (11), ledit procédé étant **caractérisé en ce qu'**il comprend :
- une réception par un serveur (30) configuré pour fournir par téléchargement un profil d'accès, d'une requête d'obtention de profil d'accès en association avec une souscription auprès d'un opérateur en provenance dudit premier module de sécurité, la souscription comprenant au moins un deuxième dispositif utilisateur (10) auquel un deuxième module de sécurité (20) est associé, le serveur ayant fourni par téléchargement au deuxième module de sécurité un profil d'accès au réseau en relation avec ladite souscription, la requête étant adressée à l'adresse de contact du serveur et comprenant une donnée permettant audit serveur d'interroger un serveur de contrôle (40) pour obtenir un ordre de téléchargement du profil d'accès ;
- en fonction de la donnée reçue, une interrogation (G1) du serveur de contrôle pour obtenir un ordre de téléchargement du profil d'accès dans le premier module de sécurité ;
- sur obtention dudit ordre, un téléchargement (G2) du profil d'accès dans le premier module de sécurité, une confirmation étant envoyée au serveur une fois le profil téléchargé.

7. Dispositif utilisateur (10), dit deuxième dispositif utilisateur, auquel est associé un module de sécurité (20), dit deuxième module de sécurité, ledit deuxième dispositif étant **caractérisé en ce qu'**il comprend :
- un premier module (104), agencé pour recevoir une commande d'association d'un premier dispositif utilisateur (11) à une souscription auprès d'un opérateur comprenant au moins ledit deuxième dispositif utilisateur, le deuxième module de sécurité ayant obtenu un profil d'accès au réseau en relation avec ladite souscription ;
- un module de commande (103), agencé pour envoyer au premier dispositif utilisateur un message comprenant une adresse de contact d'un serveur (30) configuré pour fournir par téléchargement un profil d'accès et une donnée permettant au serveur d'interroger un serveur de contrôle (40) pour obtenir un ordre de téléchargement d'un profil d'accès pour un premier module de sécurité (21) associé au premier dispositif, ledit message étant destiné à déclencher un envoi par ledit premier module de sécurité d'une requête d'obtention de profil d'accès en association avec ladite souscription, la requête étant adressée à l'adresse de contact du serveur et comprenant ladite donnée permettant audit serveur d'interroger le serveur de contrôle ;
ledit module de commande étant en outre agencé pour recevoir en provenance du premier dispositif utilisateur une confirmation d'un téléchargement du profil d'accès dans le premier module de sécurité.

8. Serveur (30) configuré pour fournir par téléchargement un profil d'accès, ledit serveur étant **caractérisé en ce qu'**il comprend :
- un module (303) de réception, agencé pour recevoir une requête d'obtention de profil d'accès en association avec une souscription auprès d'un opérateur en provenance d'un premier module de sécurité (21) associé à un premier dispositif utilisateur (11), la souscription comprenant au moins un deuxième dispositif utilisateur (10) auquel un deuxième module de sécurité (20) est associé, le serveur ayant fourni par téléchargement au deuxième module de sécurité un profil d'accès au réseau en relation avec ladite souscription, la requête étant adressée à l'adresse de contact du serveur et comprenant une donnée permettant audit serveur d'interroger un serveur de contrôle (40) pour obtenir un ordre de téléchargement du profil d'accès ;
- un module (302) d'interrogation, agencé pour, en fonction de la donnée reçue, interroger le serveur de contrôle pour obtenir un ordre de téléchargement du profil d'accès dans le premier module de sécurité ;
- un module (304) de téléchargement, agencé pour télécharger le profil d'accès dans le premier module de sécurité sur obtention d'un ordre en provenance du serveur de contrôle et pour recevoir une confirmation une fois le profil téléchargé.

9. Système comprenant un dispositif utilisateur selon la revendication 7, dit deuxième dispositif utilisateur, et un serveur configuré pour fournir par téléchargement un profil d'accès selon la revendication 8, ledit système comprenant en outre un premier dispositif utilisateur (11) auquel un premier module de sécurité (21) est associé, formant un premier terminal comprenant :
- un module de communication, agencé pour recevoir en provenance du deuxième dispositif utilisateur un message comprenant une adresse de contact d'un serveur (30) configuré pour fournir par téléchargement un profil d'accès et une donnée permettant au serveur d'interroger un serveur de contrôle (40) pour obtenir un ordre de téléchargement d'un profil d'accès pour le premier module de sécurité ;
- un module d'obtention de profil, agencé pour envoyer une requête d'obtention de profil d'accès en association avec une souscription auprès d'un opérateur, la souscription comprenant au moins le deuxième dispositif utilisateur (10) auquel le deuxième module de sécurité (20) est associé, la requête étant adressée à l'adresse de contact du serveur et comprenant ladite donnée, et pour télécharger le profil d'accès dans le premier module de sécurité ;
ledit module de communication étant en outre agencé pour envoyer au deuxième dispositif utilisateur une confirmation d'un téléchargement du profil d'accès dans le premier module de sécurité.

10. Programme pour un dispositif utilisateur, comprenant des instructions de code de programme destinées à commander l'exécution de celles des étapes du procédé d'obtention d'un profil d'accès selon l'une des revendications 1 à 5 mises en œuvre par le dispositif, lorsque ledit programme est exécuté par ledit dispositif.

11. Support d'enregistrement lisible par un dispositif utilisateur sur lequel est enregistré le programme selon la revendication 10.

12. Programme pour un serveur, comprenant des instructions de code de programme destinées à commander l'exécution de celles des étapes du procédé d'obtention d'un profil d'accès selon la revendication 6 mises en œuvre par le serveur, lorsque ledit programme est exécuté par ledit serveur.

13. Support d'enregistrement lisible par un serveur sur lequel est enregistré le programme selon la revendication 12.

## Patentansprüche

1. Verfahren zum Erhalt eines Profils zum Zugang zu einem Kommunikationsnetz für ein erstes Sicherheitsmodul (21), das einem ersten Benutzergerät (11) zugeordnet ist, das Verfahren umfassend für ein zweites Benutzergerät (10), dem ein zweites Sicherheitsmodul (20) zugeordnet ist, wobei das zweite Sicherheitsmodul ein Profil zum Zugang auf das Netz in Verbindung mit einer Teilnahme bei einem Betreiber erhalten hat, wobei das Verfahren **dadurch gekennzeichnet ist, dass**:
- bei Empfang (E10) eines Befehls zur Zuordnung des ersten Benutzergeräts zu der Teilnahme, ein Senden (E12), durch das zweite Benutzergerät an das erste Benutzergerät, einer Nachricht umfassend eine Kontaktadresse eines Servers (30), der dazu konfiguriert ist, durch Fernladen ein Zugangsprofil und ein Datenelement bereitzustellen, das es dem Server gestattet, einen Steuerungsserver (40) abzufragen, um einen Befehl zum Fernladen des Zugangsprofils zu erhalten,
wobei die Nachricht dazu bestimmt ist, ein Senden, durch das erste Sicherheitsmodul, einer Anforderung zum Erhalt eines Zugangsprofils in Verbindung mit der Teilnahme auszulösen, wobei die Anforderung an die Kontaktadresse des Servers gerichtet ist und das Datenelement umfasst, das es dem Server gestattet, den Steuerungsserver abzufragen;
- ein Empfangen (E13), durch das zweite Benutzergerät, vom ersten Benutzergerät, einer Bestätigung eines Fernladens des Zugangsprofils in das erste Sicherheitsmodul.

2. Verfahren zum Erhalt nach Anspruch 1, wobei das zweite Benutzergerät vom zweiten Sicherheitsmodul die Kontaktadresse erhält.

3. Verfahren zum Erhalt nach Anspruch 1, wobei das zweite Benutzergerät vom zweiten Sicherheitsmodul das Datenelement erhält, das es dem Server gestattet, den Steuerungsserver abzufragen.

4. Verfahren zum Erhalt nach Anspruch 1, wobei Daten, die einem Zugangsprofil zugeordnet sind, die Kontaktadresse und das Datenelement umfassen, das es dem Server gestattet, den Steuerungsserver abzufragen.

5. Verfahren zum Erhalt nach Anspruch 1, wobei die gesendete Nachricht ferner eine Kennung der Teilnahme beim Betreiber umfasst.

6. Verfahren zum Erhalt eines Profils zum Zugang zu einem Kommunikationsnetz für ein erstes Sicherheitsmodul (21), das einem ersten Benutzergerät (11) zugeordnet ist, wobei das Verfahren **dadurch gekennzeichnet ist, dass** es Folgendes umfasst:
- ein Empfangen, durch einen Server (30), der dazu konfiguriert ist, durch Fernladen ein Zugangsprofil bereitzustellen, einer Anforderung zum Erhalt eines Zugangsprofils in Verbindung mit einer Teilnahme bei einem Betreiber von dem ersten Sicherheitsmodul, die Teilnahme umfassend wenigstens ein zweites Benutzergerät (10), dem ein zweites Sicherheitsmodul (20) zugeordnet ist, wobei der Server durch Fernladen an das zweite Sicherheitsmodul ein Profil zum Zugang zum Netz in Verbindung mit der Teilnahme bereitgestellt hat, wobei die Anforderung an die Kontaktadresse des Servers gerichtet ist und ein Datenelement umfasst, das es dem Server gestattet, einen Steuerungsserver (40) abzufragen, um einen Befehl zum Fernladen des Zugangsprofils zu erhalten;
- je nach dem empfangenen Datenelement ein Abfragen (G1) des Steuerungsservers, um einen Befehl zum Fernladen des Zugangsprofils in das erste Sicherheitsmodul zu erhalten;
- bei Erhalt des Befehls, ein Fernladen (G2) des Zugangsprofils in das erste Sicherheitsmodul, wobei eine Bestätigung an den Server gesendet wird, sobald das Profil ferngeladen ist.

7. Benutzergerät (10), das zweite Benutzergerät, dem ein Sicherheitsmodul (20), das zweite Sicherheitsmodul, zugeordnet ist, wobei das zweite Gerät **dadurch gekennzeichnet ist, dass** es Folgendes umfasst:
- ein erstes Modul (104), das angeordnet ist, einen Befehl zur Zuordnung eines ersten Benutzergeräts (11) zu einer Teilnahme bei einem Betreiber zu empfangen, umfassend wenigstens das zweite Benutzergerät, wobei das zweite Sicherheitsmodul ein Profil zum Zugang zum Netz in Verbindung mit der Teilnahme erhalten hat;
- ein Steuerungsmodul (103), das angeordnet ist, an das erste Benutzergerät eine Nachricht umfassend eine Kontaktadresse eines Servers (30) zu senden, der dazu konfiguriert ist, durch Fernladen ein Zugangsprofil und ein Datenelement bereitzustellen, das es dem Server gestattet, einen Steuerungsserver (40) abzufragen, um einen Befehl zum Fernladen eines Zugangsprofils für ein erstes Sicherheitsmodul (21) zu erhalten, das dem ersten Gerät zugeordnet ist, wobei die Nachricht dazu bestimmt ist, ein Senden, durch das erste Sicherheitsmodul, einer Anforderung zum Erhalt eines Zugangsprofils in Verbindung mit der Teilnahme auszulösen, wobei die Anforderung an die Kontaktadresse des Servers gerichtet ist und das Datenelement umfasst, das es dem Server gestattet, den Steuerungsserver abzufragen;
wobei das Steuerungsmodul ferner angeordnet ist, vom ersten Benutzergerät eine Bestätigung eines Fernladens des Zugangsprofils in das erste Sicherheitsmodul zu empfangen.

8. Server (30), der dazu konfiguriert ist, durch Fernladen ein Zugangsprofil bereitzustellen, wobei der Server **dadurch gekennzeichnet ist, dass** er Folgendes umfasst:
- ein Empfangsmodul (303), das angeordnet ist, eine Anforderung zum Erhalt eines Zugangsprofils in Verbindung mit einer Teilnahme bei einem Betreiber von einem ersten Sicherheitsmodul (21) zu empfangen, das einem ersten Benutzergerät (11) zugeordnet ist, die Teilnahme umfassend wenigstens ein zweites Benutzergerät (10), dem ein zweites Sicherheitsmodul (20) zugeordnet ist, wobei der Server durch Fernladen an das zweite Sicherheitsmodul ein Profil zum Zugang zum Netz in Verbindung mit der Teilnahme bereitgestellt hat, wobei die Anforderung an die Kontaktadresse des Servers gerichtet ist und ein Datenelement umfasst, das es dem Server gestattet, einen Steuerungsserver (40) abzufragen, um einen Befehl zum Fernladen des Zugangsprofils zu erhalten;
- ein Abfragemodul (302), das angeordnet ist, je nach dem empfangenen Datenelement den Steuerungsserver abzufragen, um einen Befehl zum Fernladen des Zugangsprofils in das erste Sicherheitsmodul zu erhalten;
- ein Fernlademodul (304), das angeordnet ist, bei Erhalt eines Befehls vom Steuerungsserver das Zugangsprofil in das erste Sicherheitsmodul fernzuladen, und eine Bestätigung zu empfangen, sobald das Profil ferngeladen ist.

9. System umfassend ein Benutzergerät nach Anspruch 7, das zweite Benutzergerät, und einen Server nach Anspruch 8, der dazu konfiguriert ist, durch Fernladen ein Zugangsprofil bereitzustellen, das System ferner umfassend ein erstes Benutzergerät (11), dem ein erstes Sicherheitsmodul (21) zugeordnet ist, das ein erstes Endgerät bildet, umfassend:
- ein Kommunikationsmodul, das angeordnet ist, vom zweiten Benutzergerät eine Nachricht umfassend eine Kontaktadresse eines Servers (30), der dazu konfiguriert ist, durch Fernladen ein Zugangsprofil und ein Datenelement bereitzustellen, das es dem Server gestattet, einen Steuerungsserver (40) abzufragen, um einen Befehl zum Fernladen eines Zugangsprofils für das erste Sicherheitsmodul zu erhalten;
- ein Modul zum Erhalt eines Profils, das angeordnet ist, eine Anforderung zum Erhalt eines Zugangsprofils in Verbindung mit einer Teilnahme bei einem Betreiber zu senden, die Teilnahme umfassend wenigstens das zweite Benutzergerät (10), dem das zweite Sicherheitsmodul (20) zugeordnet ist, wobei die Anforderung an die Kontaktadresse des Servers gerichtet ist und das Datenelement umfasst, und das Zugangsprofil in das erste Sicherheitsmodul fernzuladen;
wobei das Steuerungsmodul ferner angeordnet ist, an das zweite Benutzergerät eine Bestätigung eines Fernladens des Zugangsprofils in das erste Sicherheitsmodul zu senden.

10. Programm für ein Benutzergerät, umfassend Programmcode-Anweisungen, die dazu bestimmt sind, die Ausführung jener der Schritte des Verfahrens zum Erhalt eines Zugangsprofils nach einem der Ansprüche 1 bis 5 zu steuern, die von dem Gerät durchgeführt werden, wenn das Programm von dem Gerät ausgeführt wird.

11. Speichermedium, das von einem Benutzergerät gelesen werden kann, auf dem das Programm nach Anspruch 10 gespeichert ist.

12. Programm für einen Server, umfassend Programmcode-Anweisungen, die dazu bestimmt sind, die Ausführung jener der Schritte des Verfahrens zum Erhalt eines Zugangsprofils nach Anspruch 6 zu steuern, die von dem Server durchgeführt werden, wenn das Programm von dem Server ausgeführt wird.

13. Speichermedium, das von einem Server gelesen werden kann, auf dem das Programm nach Anspruch 12 gespeichert ist.

## Claims

1. Method for obtaining a communication network access profile for a first security module (21) associated with a first user device (11), said method comprising for a second user device (10) with which a second security module (20) is associated, the second security module having obtained an access profile for accessing the network in conjunction with a subscription with an operator, the method being **characterized in that**:
- on receipt (E10) of a command for associating the first user device with said subscription, a sending (E12) by the second user device to the first user device, of a message comprising a contact address of a server (30) configured to provide by downloading an access profile and a datum allowing the server to interrogate a control server (40) so as to obtain an order for downloading of the access profile,
said message being intended to trigger a sending by said first security module of a request for obtaining an access profile in association with said subscription, the request being addressed to the contact address of the server and comprising said datum allowing said server to interrogate the control server;
- a receiving (E13) by the second user device from the first user device of a confirmation of downloading of the access profile into the first security module.

2. Method for obtaining according to Claim 1, in which the second user device obtains from the second security module the contact address.

3. Method for obtaining according to Claim 1, in which the second user device obtains from the second security module the datum allowing the server to interrogate the control server.

4. Method for obtaining according to Claim 1, in which data associated with an access profile comprise the contact address and the datum allowing the server to interrogate the control server.

5. Method for obtaining according to Claim 1, in which the sent message furthermore comprises a subscription identifier in respect of a subscription with the operator.

6. Method for obtaining a communication network access profile for a first security module (21) associated with a first user device (11), said method being **characterized in that** it comprises:
- a receiving by a server (30) configured to provide by downloading an access profile, of a request for obtaining an access profile in association with a subscription with an operator originating from said first security module, the subscription comprising at least one second user device (10) with which a second security module (20) is associated, the server having delivered by downloading to the second security module an access profile for accessing the network in conjunction with said subscription, the request being addressed to the contact address of the server and comprising a datum allowing said server to interrogate a control server (40) so as to obtain an order for downloading of the access profile;
- as a function of the datum received, an interrogating (G1) of the control server so as to obtain an order for downloading of the access profile into the first security module;
- on obtaining of said order, a downloading (G2) of the access profile into the first security module, a confirmation being sent to the server once the profile has been downloaded.

7. User device (10), so-called second user device, with which is associated a security module (20), so-called second security module, said second device being **characterized in that** it comprises:
- a first module (104), designed to receive a command for associating a first user device (11) with a subscription with an operator comprising at least said second user device, the second security module having obtained an access profile for accessing the network in conjunction with said subscription;
- a command module (103), designed to send to the first user device a message comprising a contact address of a server (30) configured to provide by downloading an access profile and a datum allowing the server to interrogate a control server (40) so as to obtain an order for downloading of an access profile for a first security module (21) associated with the first device, said message being intended to trigger a sending by said first security module of a request for obtaining an access profile in association with said subscription, the request being addressed to the contact address of the server and comprising said datum allowing said server to interrogate the control server; said command module furthermore being designed to receive from the first user device a confirmation of downloading of the access profile into the first security module.

8. Server (30) configured to provide by downloading an access profile, said server being **characterized in that** it comprises:
- a reception module (303), designed to receive a request for obtaining an access profile in association with a subscription with an operator originating from a first security module (21) associated with a first user device (11), the subscription comprising at least one second user device (10) with which a second security module (20) is associated, the server having delivered by downloading to the second security module an access profile for accessing the network in conjunction with said subscription, the request being addressed to the contact address of the server and comprising a datum allowing said server to interrogate a control server (40) so as to obtain an order for downloading of the access profile;
- an interrogation module (302), designed to, as a function of the datum received, interrogate the control server so as to obtain an order for downloading of the access profile into the first security module;
- a downloading module (304), designed to download the access profile into the first security module on obtaining of an order originating from the control server and to receive a confirmation once the profile has been downloaded.

9. System comprising a user device according to Claim 7, so-called second user device, and a server configured to provide by downloading an access profile according to Claim 8, said system furthermore comprising a first user device (11) with which a first security module (21) is associated, forming a first terminal comprising:
- a communication module, designed to receive from the second user device a message comprising a contact address of a server (30) configured to provide by downloading an access profile and a datum allowing the server to interrogate a control server (40) so as to obtain an order for downloading of an access profile for the first security module;
- a profile-obtaining module, designed to send a request for obtaining an access profile in association with a subscription with an operator, the subscription comprising at least the second user device (10) with which the second security module (20) is associated, the request being addressed to the contact address of the server and comprising said datum, and to download the access profile into the first security module;
said communication module furthermore being designed to send the second user device a confirmation of downloading of the access profile into the first security module.

10. Program for a user device, comprising program code instructions intended to control the execution of those of the steps of the method for obtaining an access profile according to one of Claims 1 to 5 implemented by the device, when said program is executed by said device.

11. Recording medium readable by a user device on which the program according to Claim 10 is recorded.

12. Program for a server, comprising program code instructions intended to control the execution of those of the steps of the method for obtaining an access profile according to Claim 6 that are implemented by the server, when said program is executed by said server.

13. Recording medium readable by a server on which the program according to Claim 12 is recorded.
